# EUROPEAN PATENT APPLICATION

(11) **EP 2 626 655 A2**
(43) Date of publication of application: **14.08.2013**
(21) Application number: 13154581.6
(22) Date of filing: 08.02.2013
(51) Int. Cl.: F25C 1/00, F25B 1/04

(54) **Low cost high efficiency ice making machine**

(30) Priority: 09.02.2012 US 201261596760 P
(71) Applicant: Manitowoc Foodservice Companies, LLC, Manitowoc, WI 54220 (US)
(72) Inventor: Erbs, Daryl G., Sheboygan, Wisconsin 53083 (US)
(74) Representative: von Kreisler Selting Werner

(57) **Abstract**

Disclosed are ice making machines which use aluminum as an alternative to copper in the ice making machine evaporator and also use an alternate coolant/refrigerant specifically targeted to provide improved heat transfer transport properties and higher heat capacitance than conventional HFC coolantlrefrigerants. Optionally, rotary compressors are used in place of conventional reciprocating compressors, further enhancing performance for the ice making machine. The disclosed ice making machines maintain high efficiency and ice output and provide equal or better energy efficiency than comparative ice making machines. At the same time, savings are realized in the material cost for the evaporator, and resulting from the combined effects of lower density and lower metal cost/unit weight offered by aluminum as compared to copper.

## Description

### CROSS-REFERENCED APPLICATION

This application claims priority to US Provisional Application No. 61/596,760, filed on February 9, 2012, which is incorporated herein in its entirety by reference thereto.

### BACKGROUND

### 1. Field of the Disclosure

The present disclosure relates, in general, to ice making machines and, more particularly, to ice making machines using a different type of compressor, along with a combination of aluminum as an alternative to copper in the evaporator as well as an alternate coolant/refrigerant specifically targeted to provide improved heat transfer transport properties and higher heat capacitance than conventional HFC coolant/refrigerants. The resulting ice making machines maintain high efficiency and ice output for a given size of ice making machine, and provide equal or better energy efficiency than similarly-sized conventional, currently used ice making machines, while realizing the savings in material cost for the evaporator resulting from the combined effects of lower density, lower metal cost and lower weight per unit offered by aluminum as compared to copper that is generally used in evaporators of similarly-sized, conventional and currently used ice making machines.

### 2. Discussion of the Background Art

Ice making machines are in widespread use for supplying cube ice in commercial operations. Typically, ice making machines produce a large quantity of ice by flowing water over a large chilled surface. The chilled surface is thermally coupled to evaporator coils that are, in turn, coupled to a refrigeration system. The chilled plate, or evaporator, usually contains a large number of indentations on its surface where water flowing over the surface can collect. Typically, the indentations are die-formed recesses within a metal plate having high thermal conductivity. As water flows over the indentations, it freezes into ice.

To harvest the ice, the evaporator is heated by hot vapor flowing through the evaporator coils. The evaporator plate is warmed to a temperature sufficient to harvest the ice from the evaporator. Once freed from the evaporator surface, a large quantity of ice cubes are produced, which fall into an ice storage bin. The ice cubes produced by a typical ice making machine are square or rectangular in shape and have a somewhat thin profile. Rather than having a three-dimensional cube shape, the ice cubes are often tile-shaped and have small height to width and length ratios/aspects.

Typically, copper is used as the base material for a grid style evaporator used in a conventional ice making machine. Also typically, HFC-type coolant/refrigerants, such as R-404A and 134A, are used in conventional machines. The combination of copper as the evaporator material and the conventional HFC-type coolant/refrigerants has become standard in the industry due, in part, to the excellent thermal conductivity of copper and readily available supply of compressors for R-404A and R-134A. Copper is, however, more dense than some possible alternatives, and is increasingly expensive. These two characteristics result in ice making machines which are unduly weighty and expensive.

Alternatives to copper do exist. However, other metals having high thermal conductivity on a par with copper are typically denser and higher cost/lb. than copper (silver and gold are two examples) and do not represent a weight/cost reduction opportunity. Aluminum in theory represents an alternative material to copper for use in an ice making machine evaporator, but its lower thermal conductivity and higher heat capacitance properties would cause a loss in performance for the ice making machine. The lower thermal conductivity of aluminum would cause the refrigeration system to work harder during the freeze cycle due to a larger temperature difference across the aluminum evaporator metal. During the harvest cycle, the combined effects of lower thermal conductivity and higher heat capacitance (poor thermal diffusivity) would cause a slower rate of warming for the aluminum evaporator compared to copper. The combined effects of these two characteristics would ultimately translate to lower ice production due to the longer harvest cycle and a subsequent penalty on overall cycle efficiency when aluminum is considered as the base material for an evaporator. To compensate for the lower thermodynamic performance of aluminum as the evaporator metal, it is possible in theory to change the specifications of the compressor to improve its capacity and efficiency, or to enlarge the surface area of the evaporator to add heat transfer capability, but these modifications would add cost and may increase the size and weight of the ice making machine itself. Any increase in size would a hindrance to the use of such an ice making machine in commercial establishments such as fast food restaurants because only a certain square footage can be allotted to the ice making machine.

Rotary compressors have not been previously employed in ice making machines. Rotary compressors are fundamentally different from the hermetic reciprocating and scroll compressors that have been used in commercial ice making machines in two ways: 1) the gas volume inside the compressor shell is at the high side pressure for the system cycle with a rotary compressor, instead of the low side pressure found in the case of reciprocating or scroll compressors, and 2) the suction gas enters directly into the compression chamber of the rotary compressor, instead of the indirect entry into the compressor shell volume that is employed in the case of hermetic reciprocating compressors. These differences have historically been viewed as a barrier to the application of a rotary compressor to a commercial ice making machine. R-410A coolant/refrigerant has not been used in commercial ice making machines due to concerns over discharge gas temperature and higher operating pressure, without proper consideration of the benefits provided by its superior transport properties.

### SUMMARY

Thus, present disclosure provides an ice making machine which can utilize a lower cost alternative to copper as the base material in an evaporator.

The present disclosure also provides for the first time employing a rotary compressor as the work input to the vapor compression cycle for the ice making machine without any loss of reliability or proper function.

The present disclosure also provides an ice making machine which utilizes a lower cost alternative to copper in the evaporator, yet maintains the ice production through a comparatively equal harvest cycle and overall cycle efficiency in the production as compared to when a copper evaporator is used.

The present disclosure further provides an ice making machine which can provide a lower cost alternative to copper as the base material in the evaporator and provide a lighter weight ice making machine.

The present disclosure still further provides an ice making machine which matches the output of conventional ice making machines using copper as the evaporator, but at equal or better energy efficiency.

Finally, the present disclosure provides for maintaining the same geometry--overall height, width, and depth--for the evaporator assembly, and also the spacing for the partition strips that form the cube cells in a grid style evaporator, to maintain the overall physical size for the ice making machine cabinet, and also provide the same size cube to the end consumer of the ice. These are important to the success of the substitution of aluminum for copper, since there is value associated with the physical space occupied by the ice making machine as well as value associated with the cube dimensions and weight.

The above and other advantages are met through applicant's present disclosure wherein a modified ice making machine has been developed which employs a rotary compressor and uses aluminum as the evaporator base material. The reliable application of rotary compressors, and the use of aluminum in an evaporator while keeping the same geometry of ice making machine and ice cube as with a copper evaporator, yet maintaining ice cube harvest, cycle efficiency and energy use, has been accomplished through applicant's novel approach.

In one of the embodiments of the present disclosure, there is provided an alternate approach to coolants for use in an ice making machine, which is to select a coolant/refrigerant that has improved thermal transport properties. The key transport properties of interest for the ice making machine evaporator are the two phase heat transfer coefficient for both evaporation (freeze cycle) and condensation (harvest cycle), and the thermal conductivity for the vapor and liquid phases. By improving the heat transfer between the coolant/refrigerant and the evaporator, the temperature difference is reduced, and the rate of heat transfer during harvest can be increased. These effects offset the impact of the change in metal properties when using aluminum for the evaporator. The end result is an ice making machine that is lower in cost, but without any loss in capacity or efficiency and without any increase in overall physical size of the ice making machine.

In an additional embodiment of the present disclosure, there is provided an ice making machine wherein the selection of the compressor is based on the higher operating pressure and higher volumetric capacity associated with the selected coolant/refrigerant(s) having improved thermal transport properties. While it is possible to use smaller displacement versions of hermetic reciprocating compressors with these coolant/refrigerants, the compressor shell and internal mechanical parts must be redesigned to accommodate the higher pressure and forces resulting from the selected coolant/refrigerant(s). Preferably and optionally, rotary compressors that employ a rolling piston for the vapor compression process are used in the present disclosure. These have specific advantages over hermetically sealed piston-type reciprocating compressors when used with the selected coolant/refrigerant(s). The smaller dead volume in the compression space and smaller leakage paths for rotary compressors reduce the impact of the higher density and working pressure on the efficiency of the compressor. The smaller compressor shell, due to the more compact compression mechanism, also reduces the impact of the higher working pressure on the compressor shell material cost.

In yet another embodiment of the present disclosure, the operating cycle for the ice making machine has been optimized through the sizing of the heat exchangers employed in the thermodynamic cycle, most notably the suction-liquid heat exchanger (SLHX), along with the setting of the thermal expansion valve, and coolant/refrigerant charge, to ensure the rotary compressor does not experience a quantity of liquid coolant/refrigerant entering the suction port during the harvest cycle of the ice making machine when hot gas is provided to the evaporator. This also ensures that the suction gas condition during the freeze cycle has low enough coolant/refrigerant enthalpy to control the discharge temperature of the coolant/refrigerant(s) (e.g., R-410A or R-32) within the operating limits of the rotary compressor.

Thus, in one of its specific embodiments, the present disclosure provides an ice making machine comprising: a coolant/refrigerant system comprising a coolant/refrigerant, a compressor, a condenser, an evaporator, an expansion device, a suction-liquid heat exchanger, a hot gas valve for directing hot gases from the compressor to the evaporator, and interconnecting lines therefor, wherein the compressor is a rolling piston type device.

And, in another of its specific embodiments, the present disclosure provides an ice making machine comprising: a coolant/refrigerant system comprising a coolant/refrigerant, a compressor, a condenser, an evaporator, an expansion device, a suction-liquid heat exchanger, a hot gas valve for directing hot gases from the compressor to the evaporator, and interconnecting lines therefor, wherein the evaporator is comprised of aluminum, the coolant/refrigerant has a forced convection heat transfer coefficient of at least about 1000 Btu/hr.-ft.-F, a liquid thermal conductivity of at least about 0.060 Btu/hr.-ft.-F at 0°F, and a volumetric refrigeration capacity of at least about 75 Btulft.³, and the compressor is a rotary compressor.

### BRIEF DESCRIPTION OF THE DRAWINGS

Further details, features and advantages of this disclosure result from the following description of an embodiment using the drawing, in which:

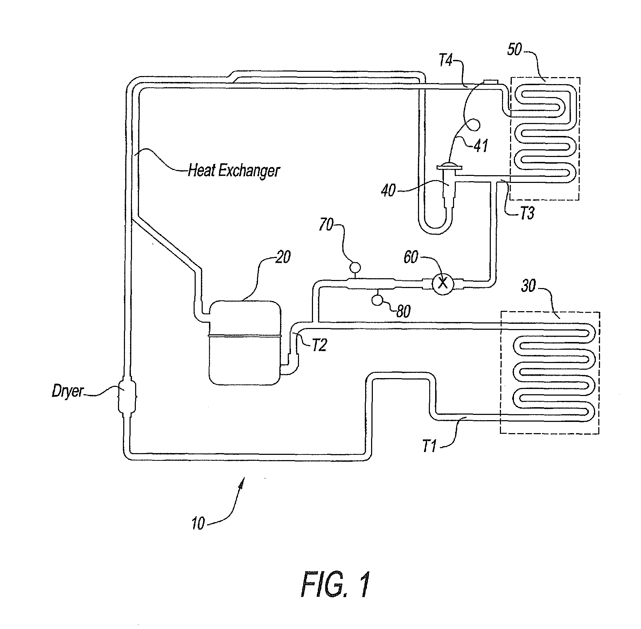

Fig. 1 is a schematic drawing of an ice making machine.

### DETAILED DESCRIPTION OF THE DISCLOSURE

Fig. 1 depicts a general flow scheme of a coolant/refrigerant system of an ice making machine such as those which are the subject of the present disclosure. In Fig. 1, there is closed coolant/refrigerant system 10 containing coolant/refrigerant in which compressor 20 is filled to an appropriate level with a suitable gas coolant/refrigerant. Compressor 20 increases the pressure of, and thus the temperature of, the coolant/refrigerant. The coolant/refrigerant exits the compressor 20 and is passed along, due to the compressor 20 pressurizing the entire system, to condenser 30 where the high pressure coolant/refrigerant gives up its heat and liquefies. The high pressure coolant/refrigerant gives up its heat through ambient heat exchange with the environment, occurring as the high pressure coolant/refrigerant, passes through the serpentine-like coils of the condenser. The coolant/refrigerant leaves the condenser as a high pressure liquid and passes through the suction-liquid heat exchanger (SLHX) where temperature and enthalpy of the liquid coolant/refrigerant leaving the condenser is further reduced through heat exchange with the coolant/refrigerant leaving the ice making machine evaporator. The liquid coolant/refrigerant then flows to expansion valve 40. Expansion valve 40 can be said to have a "condenser" side (on the side of the system where the flow of coolant/refrigerant comes from the condenser) and an "evaporator" side (on the side of the system where the flow of coolant/refrigerant goes to the evaporator). Because the high pressure liquid coolant/refrigerant is urged through expansion valve 40 due to the pressure drop across expansion valve 40, the liquid coolant/refrigerant immediately boils, gains heat from evaporator 50, and cools evaporator 50. At the surface of evaporator 50 there are located a plurality of cells (not shown) into which water flows and freezes in thin layers repeatedly, yielding ice cubes of substantially uniform dimension. At intervals determined by electronic sensors (not shown), hot gas solenoid valve 60 is opened to direct hot discharge gas from compressor 20 to evaporator 50 inlet, warming evaporator 50 to a temperature sufficient to melt the ice at the interface between the ice and evaporator 50 surface, which releases the slab of ice formed on evaporator 50 into a storage bin situated below the ice making machine. After passing through evaporator 50, the coolant/refrigerant gas flows through the SLHX, where it is warmed by the liquid exiting condenser 30, and then flows to the suction inlet of compressor 20.

Evaporator 50 of the present disclosure, as mentioned, can be made of aluminum, or an alloy comprising aluminum. Within the meaning of "aluminum", it is possible to use any of the common alloy families for evaporator 30. The most preferred alloys are the 3000 series, due to cost and brazing performance, the 6000 series, due to mechanical strength for sheet material, and the 4000 series for die cast material. The selection of the alloy will depend upon the particular performance characteristics desired and the manufacturing performance anticipated. For brazed evaporators 50, characteristics which may be important in any particular application include, but are not limited to: bonding of all partition edges to the pan (gap control), post-brazing surface chemistry compatible with the plating/coating (if plating/coating will be undertaken), durability of brazed joints over a lifetime of freeze-thaw cycles, dimensional control over grid surfaces, and process control limits. Evaporator 50 may also be cast aluminum or cast aluminum alloy. Cast evaporators 50 have the benefit of needing fewer manufacture and production steps than brazed evaporators 50, but have disadvantages in controlling the thickness of the cast aluminum. Also, cast aluminum evaporators 50 often require additives to improve flow and movement of the molten aluminum into the casting mold, and some of these additives have the characteristic of being insulators which, in turn, sometimes inhibit or restrict heat transfer characteristics of evaporator 50. At the present time, brazed evaporators 50 are preferred, and the brazing material is preferably an aluminum alloy having a melt temperature about 50°C below the melt temperature of the base aluminum evaporator 50. Typical preferred aluminum brazing alloys are in the aluminum 4000 series of alloys. These alloys have a relatively high percentage of silicon as an alloying element that reduces the melting temperature of the alloy. There is a relatively narrow window around 1100°F for the brazing temperature of these alloys. The temperature must be controlled within this narrow window during the brazing process so that the melting temperature of the base aluminum material being brazed is not exceeded. The composition and properties of a typical brazing alloy are shown below. This material is available clad onto sheet aluminum, as a foil or in paste form. The composition of the presently preferred brazing material is a 4047 aluminum alloy, having an aluminum content of between about 87%-89%, a silicon content of about 11 %-13%, a content of other minor elements (each) of about 0.05%, maximum, and a content of other minor elements (total) of about 0.15%, maximum. The physical properties of an alloy of this type are: melting point, about 1070°F (577°C), a flow point of about 1080°F (582°C), a brazing range of between about 1080°F-1120°F (582°C-604°C), a specific gravity of about 2.66, and a density of about 0.096 lbs/in³.

Evaporator 50 may be left uncoated, or may be coated for use. For coated/plated aluminum evaporators 50, development of surface chemistry specifications may be useful, depending upon the application, including: the surface preparation process prior to the plating or coating process, the plating/coating formulation and bath chemistry, the process steps and process parameter control limits, an analysis of plating/coating failures during durability testing, and FDA approval for the coating/plating, if needed. Among the coatings useful for evaporator 50 are nickel coatings, preferably electroless nickel coatings, and organic polymer based coatings. Electroless nickel or other metallic electroless coatings are known in the art, and any such coating may be selected based upon the application in mind. When selecting an electroless nickel coating, the factors mentioned above should be kept in mind. The organic polymer based coatings useful in the present disclosure are also known in the art, and are sometimes referred to as "electrocoating". Electrocoating is a method of applying various types of coating to electrically conductive
surfaces. The coating constituents utilized are dispersed in water and contained in a special bath. After cleaning and any other necessary preparation, the parts to be coated are immersed in the bath and the coating is applied by the action of an electric current. After coating to the required thickness, the parts are removed from the bath and excess coating is rinsed off and recycled. The applied coating is hardened (for example by baking at elevated temperature) to achieve its performance properties. Among the coatings useful in this latter approach are organic polymer based coatings based upon fluorine-based polymers, which may also contain a ceramic oxide. Such coatings may be obtained from known suppliers, such as LVH Coatings Ltd., Station Road, Coleshill, UK.

Coolant/refrigerants based on R-32, due to the excellent transport properties and specific capacity of R-32, provide the target characteristics of improved thermal transport properties of interest for evaporator 50. As mentioned above, these characteristics include the two phase heat transfer coefficient for both evaporation (freeze cycle) and condensation (harvest cycle), and the specific heat for the vapor and liquid phases. Difluoromethane, also called HFC-32 or R-32, is an organic compound of the dihalogenoalkane variety. It is based on methane, except that two of the four hydrogen atoms have been replaced by fluorine atoms. Hence the formula is CH₂F₂ instead of CH₄ for normal methane. Difluoromethane is a coolant/refrigerant that has zero ozone depletion potential. Difluoromethane in azeotropic (50%/50% weight/weight) mixture with pentafluoroethane (R-125) is known as R-410A, a common replacement for various chlorofluorocarbons (CFCs) in new coolant/refrigerant systems, especially for air-conditioning. The azeotropic mixture of difluoromethane with pentafluoroethane (R-125) and tetrafluoroethane (R-134A) is known as R-407A through R-407E depending on the actual compositional make-up of the mixture. Other mixtures based on R-32 are known as well. R-410A is the current commercially available preferred option, but due to expected changes in safety classifications and building codes, other blends involving R-32 and pure R-32 may become suitable choices.

As noted, there can be a number of coolant/refrigerant blends that employ R-32 as a primary ingredient to provide the required transport properties to achieve target ice production capacity and energy efficiency. The key parameters which should be considered and which the coolant/refrigerant should have are a forced convection heat transfer coefficient of at least about 1000 Btu/hr.-ft.²-F, a liquid thermal conductivity of at least about 0.060 Btu/hr.-ft.-F at 0°F, and a volumetric refrigeration capacity of at least 75 Btufft.³. R-410A has a forced convection heat transfer coefficient of 1100, a liquid thermal conductivity of 0.063 and a volumetric refrigeration capacity of 75 Btufft.³. The coolant/refrigerant should also be a pure component or an azeotropic mixture to avoid any performance degradation that may occur in evaporator 50 due to the temperature glide of a zoetrope as the coolant/refrigerant evaporates or condenses.

The selection of R-41 0A, R-32, or other blended coolant/refrigerants based on R-32, requires selection of a compressor based on the higher operating pressure and higher volumetric capacity associated with R-410A or other R-32 based coolant/refrigerants. While it is possible to use smaller displacement versions of hermetic reciprocating compressors with R-410A, if the compressor shell and internal mechanical parts are redesigned to accommodate the higher pressure and forces resulting from R-410A when compared to the conventional industry choice of R-404A for commercial ice making machines, rotary compressors that employ a rolling piston for the vapor compression process have specific advantages for use with R-410A or R32 over reciprocating compressors. The smaller dead volume in the compression space and smaller leakage paths for rotary compressors reduce the impact of the higher density and working pressure on the efficiency of the compressor. The smaller compressor shell, due to the more compact compression mechanism, reduces the impact of the higher working pressure on the compressor shell material cost. The introduction of a rotary compressor into a commercial ice making machine enables a cost efficient and reliable refrigeration system. Selection of the particular rotary compressor will depend upon the size and capacity of the ice making machine. The reliable application of rotary compressors to an ice making machine requires precise control of the amount of liquid coolant/refrigerant entering the compressor suction port during the harvest cycle and the degree of superheat entering the compressor suction port during the freeze cycle.

Alternates to a rotary compressor include scroll compressors, and reciprocating compressors. Scroll compressors eliminate the dead volume in the compression space, but have greater leakage path relative to the displacement than a rotary compressor, and in the smaller sizes suitable for the majority of the ice making machines, are less efficient and more expensive to manufacture. As noted above, reciprocating compressors are significantly less efficient due to the relative high pressure ratio for an ice making machine combined with the inherent dead volume in the compressor. There are also discharge temperature limitations with reciprocating compressors due to the high pressure ratio and low specific heat of vapor for R-41 0A.

### DESCRIPTION OF THE PREFERRED EMBODIMENTS

The disclosure will now be described with reference to the following examples. These examples are for the purpose of more fully explaining to one of skill in the art the practice of the present disclosure. These examples are not limiting to the full scope of the present disclosure as explained above and as encompassed in the claims which follow.

The following examples compare the ice making production and energy usage of the ice making machine of the present disclosure, using an aluminum evaporator made from 3000 series aluminum with brazed construction, and electroless nickel plating, R-410A coolant/refrigerant and a rotary compressor (Rotary 124 - YV6A7), to the same general model of ice making machine not having the modifications taught by the present disclosure. The comparative ice making machines not having the modifications of the present disclosure use a copper evaporator, a R-404A coolant/refrigerant and a reciprocal piston compressor (Manitowoc SY0452A-161 Baseline). Ice was produced at various air/water temperature production protocols. For air temperatures of 50°F and 70°F, the water temperature was 50°F; for air temperature of 90°F, the water temperature was 70°F; and for air temperature of 110°F, the water temperature was 90°F. At the temperature combination of 50°F/50°F, the ice making machine according to the present disclosure produced 458 lbs. of ice per 24 hours, compared to 440 lbs. of ice for the comparative ice making machine. At the temperature combination of 70°F/50°F, the ice making machine according to the present disclosure produced 450 lbs. of ice per 24 hours, compared to 442 lbs. of ice for the comparative ice making machine. At the temperature combination of 90°F/70°F, the ice making machine according to the present disclosure produced 378 lbs. of ice per 24 hours, compared to 346 lbs. of ice for the comparative ice making machine. At the temperature combination of 110"F/90°F, the ice making machine according to the present disclosure produced 291 lbs. of ice per 24 hours, compared to 267 lbs. of ice for the comparative making machine. The results are presented in graph form, below.

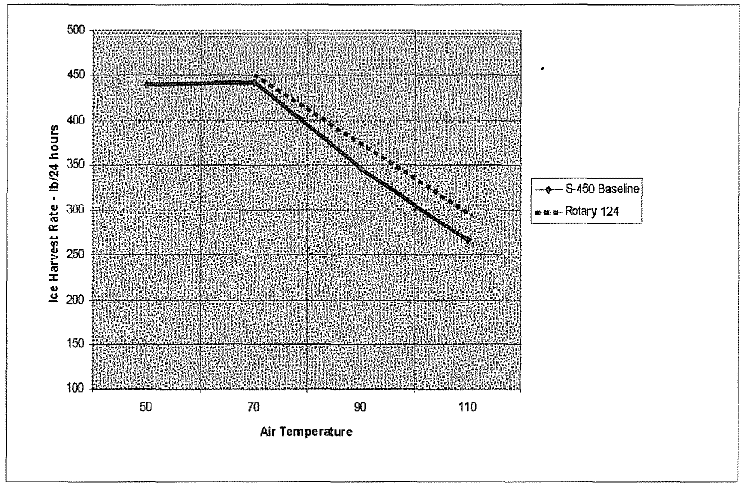

In the above detailed description, the specific embodiments of this disclosure have been described in connection with its preferred embodiments. However, to the extent that the above description is specific to a particular embodiment or a particular use of this disclosure, this is intended to be illustrative only and merely provides a concise description of the exemplary embodiments. Accordingly, the disclosure is not limited to the specific embodiments described above, but rather, the disclosure includes all alternatives, modifications, and equivalents falling within the true scope of the appended claims. Various modifications and variations of this disclosure will be obvious to a worker skilled in the art and it is to be understood that such modifications and variations are to be included within the purview of this application and the spirit and scope of the claims.

## Claims

1. An ice making machine comprising:
a coolant/refrigerant system comprising coolant/refrigerant, a compressor, a condenser, an evaporator, an expansion device, a suction-liquid heat exchanger, a hot gas valve for directing hot gases from the compressor to the evaporator, and interconnecting lines therefor, wherein the compressor is a rolling piston type device.

2. An ice making machine according to claim 1, wherein the compressor is a rotary rolling piston type hermetic compressor.

3. An ice making machine comprising:
a coolant/refrigerant system comprising coolant/refrigerant, a compressor, a condenser, an evaporator, an expansion device, a suction-liquid heat exchanger, a hot gas valve for directing hot gases from the compressor to the evaporator, and interconnecting lines therefor, wherein the coolant/refrigerant has a forced convection heat transfer coefficient of at least about 1000 Btu/hr.-ft.²-F, a liquid thermal conductivity of at least about 0.060 Btu/hr.-ft.-F at 0°F,
and a volumetric refrigeration capacity of at least about 75 Btu/ft.³

4. An ice making machine according to claim 3, wherein the coolant/refrigerant is comprised of R-32.

5. An ice making machine according to claim 3, wherein the coolant/refrigerant is comprised of R-410-A.

6. An ice making machine comprising:
a coolant/refrigerant system comprising coolant/refrigerant, a compressor, a condenser, an evaporator, an expansion device, a suction-liquid heat exchanger, a hot gas valve for directing hot gases from the compressor to the evaporator, and interconnecting lines therefor, wherein the evaporator is comprised of aluminum.

7. An ice making machine according to claim 6, wherein the evaporator is brazed or cast aluminum.

8. An ice making machine according to claim 7, wherein the evaporator is brazed aluminum and is coated.

9. An ice making machine according to claim 8, wherein the evaporator is coated with a coating selected from electroless nickel coating and electrocoated polymer coating.

10. An ice making machine comprising:
a coolant/refrigerant system comprising coolant/refrigerant, a compressor, a condenser, an evaporator, an expansion device, a suction-liquid heat exchanger, a hot gas valve for directing hot gases from the compressor to the evaporator, and interconnecting lines therefor, wherein the evaporator is comprised of aluminum, the coolant/refrigerant has a forced convection heat transfer coefficient of at least about 1000 Btu/hr.-ft.²-F, a liquid thermal conductivity of at least about 0.060 Btu/hr.-ft.-F at 0°F, and a volumetric refrigeration capacity of at least about 75 Btu/ft.³ and the compressor is a rotary compressor.

11. An evaporator for use in an ice making machine, said evaporator comprised of coated and brazed aluminum brazed with a brazing material comprised of an aluminum alloy having an aluminum content of between about 87%-89% and a silicon content of about 11%-13%, and coated with a coating selected from electroless nickel coating and electrocoated polymer coating.

12. A method of making ice in an ice making machine, said method comprising flowing water over an evaporator comprised of aluminum, and cooling the evaporator using a coolant/refrigerant having a forced convection heat transfer coefficient of at least about 1000 Btu/hr.-ft.-F, a liquid thermal conductivity of at least about 0.060 Btu/hr.-ft.-F at 0°C, and a volumetric refrigeration capacity of at least about 75 Btu/ft.³
